# EUROPÄISCHE PATENTANMELDUNG

(11) **EP 3 179 424 A1**
(43) Veröffentlichungstag der Anmeldung: **14.06.2017**
(21) Anmeldenummer: 16203572.9
(22) Anmeldetag: 12.12.2016
(51) Int. Cl.: G06Q 10/08

(54) **VORRICHTUNG UND VERFAHREN ZUR ÜBERTRAGUNG, SPEICHERUNG UND DARSTELLUNG VON DATEN**

(30) Priorität: 11.12.2015 DE 102015121659
(71) Anmelder: Scherb, Roland, 85598 Baldham (DE)
(72) Erfinder: Scherb, Roland, 85598 Baldham (DE)
(74) Vertreter: nospat Patent- und Rechtsanwälte GbR

(57) **Zusammenfassung**

Die vorliegende Erfindung betrifft eine Vorrichtung zur Übertragung, Speicherung und Darstellung von Daten an definierten Stellen innerhalb eines Warenlagers sowie ein entsprechendes Verfahren zum Betreiben eines Warenlagers. Um eine Vorrichtung der genannten Art unter Verbesserung der Eigenschaften hinsichtlich einer Erweiterung des Funktionsumfangs sowie des Einsatzfeldes bei effizienterem Aufbau sowie ein entsprechendes Betriebsverfahren in Warenlagern zu schaffen wird vorgeschlagen, dass innerhalb des Warenlagers (W) Cyber-physische Systeme CPS (1) angeordnet sind, die als dezentrale Vorrichtungen zur Übertragung, Speicherung und Darstellung von Daten ausgebildet sind, und die Cyber-physischen Systeme (1) jeweils mit einer eigenen, dezentralen Steuerung versehen sind, wobei drahtlose Datenverbindungen zur Vernetzung der Cyber-physische Systeme (1) miteinander in einem Internet der Daten und Dienste vorgesehen sind.

## Beschreibung

Die vorliegende Erfindung betrifft eine Vorrichtung zur Übertragung, Speicherung und Darstellung von Daten an definierten Stellen innerhalb eines Warenlagers sowie ein entsprechendes Verfahren zum Betreiben eines Warenlagers.

Aus dem Stand der Technik sind diverse Ansätze zur Übertragung, Speicherung und Darstellung von Daten an definierten Stellen innerhalb eines Warenlagers bekannt, die u.a. auch eine automatisierte Preisauszeichnung an Verkaufsregalen in Supermärkten betreffen. Aus dem Stand der Technik sind u.a. durch die WO 2011045441 A1, EP 2154088 B1, DE 102012209941 A1 und AT 509311 A1 entsprechende Vorrichtungen in Form von Warenetiketten bekannt, die diverse Vorschläge zur Verbesserung einer Übertragung von Daten sowie deren Darstellung vor Ort offenbaren. Hier werden bekannte sog. Wegwerftransponder insbesondere durch den Einsatz wiederbeschreibbarer energie-armer Displays weiterentwickelt.

Die vorliegende Erfindung hat das Ziel eine Vorrichtung der genannten Art unter Verbesserung der Eigenschaften hinsichtlich einer Erweiterung des Funktionsumfangs sowie des Einsatzfeldes bei effizienterem Aufbau sowie ein entsprechendes Betriebsverfahren in Warenlagern zu schaffen.

Diese Aufgabe wird erfindungsgemäß dadurch gelöst, dass innerhalb des Warenlagers ein sog. Cyber-physisches System (CPS) als Mittel zur Übertragung, Speicherung und Darstellung von Daten vorgesehen ist. Ein CPS bezeichnet einen Verbund informatischer, softwaretechnischer Einzel-Komponenten, die jeweils mechanische und/oder elektronische Bestandteile umfassen, wobei diese Einzel-Komponenten über eine Dateninfrastruktur, wie z. B. das Internet, miteinander kommunizieren. Die CPS sind als dezentrale Vorrichtungen zur Übertragung, Speicherung und Darstellung von Daten ausgebildet. Damit stellen CPS also jeweils mit einer eigenen, dezentralen Steuerung versehene, intelligente Objekte dar, wobei drahtlose Datenverbindungen zur Vernetzung der CPS miteinander in einem Internet der Daten und Dienste, bzw. Internet of Things und kurz IoT, vorgesehen sind. Da ein CPS in seiner Größe im Wesentlichen frei skalierbar ist, wird im Rahmen der vorliegenden Erfindung auch eine einzige entsprechend mit einem Speicher, einem eigenen Energiemanagement, einem Anzeige- und/oder Bedienelement sowie Sende- und Empfangsmitteln ausgerüstete Einzel-Komponente bereits als CPS bezeichnet. Darauf aufbauend lassen sich durch Zufügung weiterer Einzel-Komponenten der vorstehend charakterisierten Art grundsätzlich beliebig große Systeme aufbauen.

Im Rahmen der Beschreibung der vorliegenden Erfindung ist der Begriff des "Warenlagers" weit auszulegen. Insbesondere sind alle Bereiche hierbei mit zu verstehen, die bei einem sog. Supply-Chain-Management zu berücksichtigen sind. Eine Steuerung und Verwaltung eines Warenlagers erstreckt sich daher im weitesten Sinne von dem Eingang einer jeweiligen Bestellung, über diverse Fertigungs- und Transportschritte bis zum Versand eines fertigen Produktes, bis zum Eingang bei dem Kunden, sowie eine Wartung des fertigen Produktes über einen Produkt-Lebenszyklus hinweg.

Weiterbildungen der Erfindung sind Gegenstand der abhängigen Ansprüche. Demnach verwenden Cyber-physische Systeme bzw. CPS einen Teil ihrer Intelligenz zur Selbststeuerung und Kommunikation bzw. Zusammenarbeit in einem Netzwerk. CPS sind also dazu ausgebildet, sich selbständig und/oder auch gegenseitig zu steuern. Dazu verfügen CPS über mindestens eine gemeinsame bzw. vorbestimmte Daten-Schnittstelle. Die CPS steuern sich insbesondere in der Weise selbstständig, dass ein Bestand intern um einen aktuell gemeldeten Bedarf reduziert wird. Insbesondere ist gemäß einer Weiterbildung der Erfindung je CPS intern eine Schwelle definiert, mit deren Erreichen oder Unterschreiten eine Nachfüllung des Bestandes über eine separate Meldung durch das betreffende CPS aktiviert und selbst ausgesandt wird. Weitere Beispiele für selbstständige und gegenseitige Steuerung werden nachfolgend noch anhand von Ausführungsbeispielen unter Bezugnahme auf die Zeichnung beschrieben.

Vorteilhafter Weise werden zur Verkürzung der Reaktionszeiten und Selbststeuerung benötigte Daten in einer wesentlichen Weiterbildung der Erfindung in den einzelnen CPS selbst dezentral bevorratet. Dazu weist jede CPS in einer Weiterbildung der Erfindung einen eigenen Datenspeicher auf, der vorzugsweise nicht flüchtig ausgebildet ist.

Zur Energieversorgung ist gemäß einer bevorzugten Ausführungsführungsform der Erfindung vorgesehen, dass eine stationäre Energieversorgung vorgesehen ist, insbesondere in Form einer langlebigen Batterie. Alternativ oder zusätzlich ist jede CPS auch zur Aufnahme von elektro-magnetischer Energie aus einem Funkfeld zur Versorgung und/oder Zwischenspeicherung ausgebildet.

In einer bevorzugten Ausführungsform der Erfindung ist ein CPS nach außen hin als Label oder gar als ESL-Label ausgebildet, um die bislang üblicherweise eingesetzten Etiketten in Anpassung auf gebräuchliche Formate und ablesbare Informationsinhalte und Informationsformate zu ersetzen. Dazu ist vorzugsweise in jedem CPS eine Logik mit einer Datenverarbeitung vorgesehen, durch die ein nicht-flüchtiges Display mit Graphikdaten und der erforderlichen elektrischen Energie versorgt wird. Eine entsprechend erweiterte Logik ist vorzugsweise mit zusätzliche Eingabemitteln, insbesondere mechanischen Eingabemitteln, Ausgabemitteln, insbesondere optischen Ausgabemitteln und/oder Sensoren verbunden.

Eine Auftragsverarbeitung läuft nach einem erfindungsgemäßen Verfahrens so ab, dass von einem ersten CPS entsprechend einem ersten Bestandteil der Auftrags jeweils Meldungen an weitere Label bzw. CPS versandt werden, die mit entsprechenden Stückzahlen auch zu diesem aktuell vorliegenden und abzuarbeitenden Auftrag beitragen. In diesem Sinne steuern und beeinflussen sich die CPS z.B. Label gegenseitig.

Stellt nun ein CPS gemäß einer Weiterbildung der Erfindung fest, dass ein vorliegender Bestand für Deckung einer aktuellen oder zukünftig zu erwartenden Anforderung von Teilen nicht mehr ausreichend ist, so wird hier direkt eine Meldung zum Nachordern bzw. Auffüllen ausgesandt. Hierzu wird vorteilhafterweise ein jeweiliger Schwellwert definiert, mit dem ein aktueller Bestand mindestens bei Eintreffen eines Auftrags bzw. Teilauftrags verglichen wird. Alternativ oder zusätzlich kann durch ein CPS ein Austausch- oder Ersatzteil durch eine entsprechende interne Meldung durch Deckung des aktuellen Bedarfs aktiviert werden.

In einer Weiterbildung der Erfindung wird parallel eine entsprechende Rückmeldung an ein Waren-Wirtschaftssystem oder einen Sachbearbeiter ausgegeben, damit nachfolgend ein Bestand wieder aufgefüllt werden kann. Dazu werden entsprechende Ausgabevorrichtungen an einem CPS verwendet.

Nachfolgend werden weitere Merkmale und Vorteile einer erfindungsgemäßen Vorrichtung unter Bezugnahme auf Abbildungen der Zeichnung näher erläutert. Darin zeigen in schematischer Darstellung:
- Figur 1:: ein Blockschaltdiagramm eines Ausführungsbeispiels eines elektronischen Labels mit erweiterter Funktionalität;
- Figur 2:: ein erweitertes Blockschaltdiagramm zur Darstellung einer neuartigen Kommunikationsstruktur innerhalb eines Warenlagers;
- Figur 3:: ein Flussdiagramm zur Darstellung einer DatenAbarbeitung innerhalb eines Auftrages über eine Anzahl von CPS-Einheiten hinweg;
- Figur 4:: ein Flussdiagramm zur Darstellung einer Fertigung zwischen Planungs-und Dispositionsebene sowie einer Produktionsebene mit Steuervorgängen innerhalb eines CPS;
- Figur 5:: eine Ausführungsform eines einen Produkt-Lebenszyklus begleitenden CPS;
- Figur 6:: ein Parkhaus im Sinne eines Warenlagers mit Ermittlung freier Flächen sowie integrierter individueller Parkzeit-Ermittlung und Abrechnung auf Basis eines zugeordneten CPS und
- Figur 7:: ein elektronisches Label nach dem aktuellen Stand der Technik.

Über die verschiedenen Abbildungen hinweg werden für gleiche Elemente stets die gleichen Bezugszeichen verwendet.

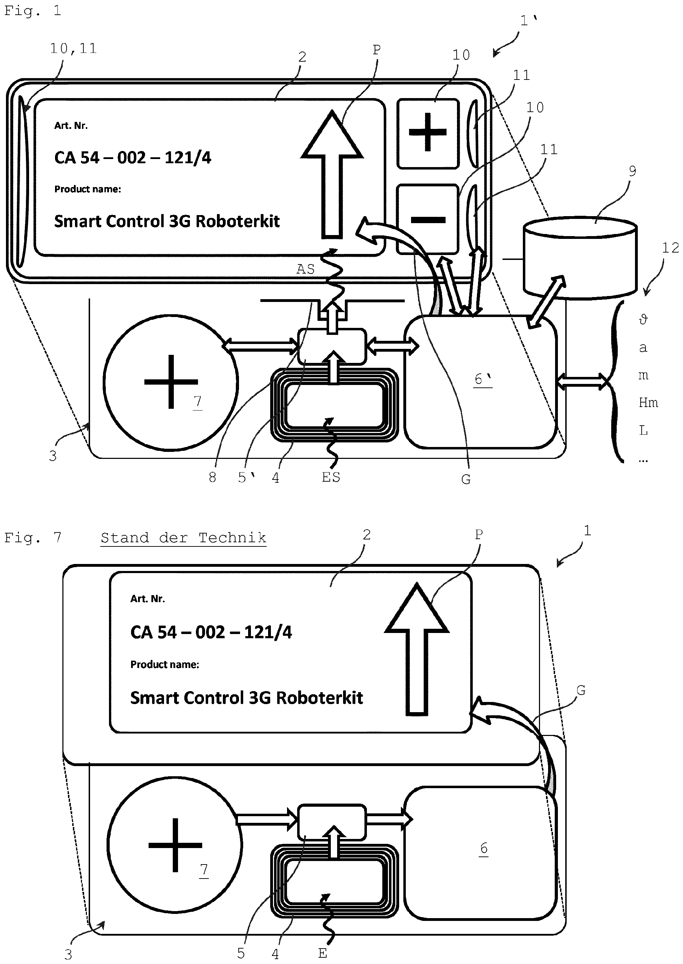

Die Abbildung von Figur 7 stellt ein elektronisches Label 1 nach dem aktuellen Stand der Technik dar, wie sie z.B. durch die AT 509 311 A1 als sog. Electronic Shelf Label (ESL) für eine Beschriftung von Regalfächern in Supermärkten eingesetzt wird. Insofern kann ein Supermarkt als Warenlager mit Kleinteile-Ladungsträger-Plätzen verstanden werden. Hierin ist das Label 1 an einer in einem Einsatzfall nach außen sichtbaren Oberseite mit einem Display 2 zur Anzeige aller für Label z.B. an einem Regalfach bekannten Angaben versehen. Eine Erweiterung der Anzeige auf dem Display 2, hier ein Pfeil P, weist in der angedeuteten Art auf ein betreffendes Regalfach, um die Beschriftung durch dieses ESL einer Ware augenfällig und eindeutig zuzuordnen. Das Display 2 ist hier als bistabile Anzeige in Form eines sog. Paper White Displays ausgeführt, das einen sehr geringen Stromverbrauch aufweist, bei geringem Energieaufwand neu beschrieben werden kann und dessen Anzeige auch bei leerer Batterie erhalten bleibt. Dieses eine Oberfläche der außen sichtbaren Oberseite im Wesentlichen ausfüllende Display 2 bildet in gewisser Weise einen Deckel für ein geschlossenes Gehäuse 3 des ESL, in dem eine Empfangsantenne 4 und eine Empfangseinheit 5 enthalten sind. Über die Empfangsantenne 4 empfangene Eingangssignale ES werden in der Empfangseinheit 5 vorverarbeitet, wobei in einer Logik 6 eine Datenauswertung mit Ausgabe eines Anzeigesignals G unter Versorgung durch eine Batterie 7 zur Anzeige des Anzeigesignals G in dem Display 2 vorgenommen wird. Die Logik ist zudem dazu ausgebildet, jedem Label 1 eine jeweils ein- eindeutige Kennung zu geben, so dass nur für dieses betreffende Label 1 bestimmte Eingangssignale ES auch weiter verarbeitet werden. Damit ist es z.B. über ein WLAN-Funksignal ES möglich, ein bestimmtes Label 1 zu adressieren, um eine in weiten Bereichen beliebige Beschriftung auf dem Display 2 dieses Labels 1 anzeigen zu lassen. Damit kann eine Beschriftung eines jeweiligen ESL bedarfsgerecht unter Auslösung durch ein zentrales System, wie z.B. ein Waren-Management-System, auch drahtlos abgeändert oder ganz neu beschrieben werden. Ein heute noch verbreitet üblicher, aufwändiger und fehlerträchtiger händischer Wechsel von Schildchen aus Papier oder Pappe oder gar handschriftliche Änderungen an dem jeweiligen Regalfach ist hierzu also nicht mehr notwendig. Auch kann eine entsprechende Preisänderung eines Artikels direkt an ein Kassensystem weitergeleitet werden, damit ein dort erkannter oder eingegebener Artikel korrekt einer aktuellen Angabe entsprechend bepreist werden kann.

Figur 1 ist ein Blockschaltdiagramm eines Ausführungsbeispiels eines elektronischen Labels 1' mit gegenüber der bekannten Ausführungsform gemäß Figur 7 erweiterter Funktionalität zur Übertragung, Speicherung und Darstellung von Daten innerhalb eines hier nicht weiter dargestellten Warenlagers W. Dieses elektronische Label 1' ist nun dadurch zu einem Cyber-physischen System gewandelt und erweitert worden, dass es nun eine dahingehend erweiterte Logik 6' aufweist, die eine eigene, dezentrale Steuerung des elektronischen Labels 1' bildet. Zusammen mit einer über eine Sende- und Empfangseinheit 5' angesteuerte Sendeantenne 8 ist nun in diesem elektronischen Label 1' eine Schnittstelle vorgesehen, um durch eine drahtlose Datenverbindung eine Vielzahl von weiteren Cyber-physischen Systemen beispielsweise in Form weiterer Label 1' miteinander in einem Internet der Daten und Dienste z.B. gemäß ZigBee-Spezifikation zu vernetzen. Diese Cyber-physischen Systeme sind dazu ausgebildet, sich selbständig und/oder auch gegenseitig zu steuern und Daten weiterzuleiten, wie nachfolgend noch anhand von Ausführungsbeispielen beschrieben wird.

Als zusätzliche Erweiterung sind gemäß Figur 1 zur Selbststeuerung benötigte Daten in dem elektronischen Label 1' selbst dezentral bevorratet. Dazu weist dieses elektronischen Label 1' einen eigenen Datenspeicher 9 auf, der nicht flüchtig ist und damit auch im Fall eines Stromausfalls keine Daten oder gar die zur Umsetzung eines erfindungsgemäßen Verfahrens erforderlichen kleinen Programme verliert.

Wie zuvor schon zu dem Electronic Shelf Label bzw. ESL gemäß Figur 7 beschrieben, so weist auch das elektronische Label 1' eine stationäre Energieversorgung auf, die in Form einer langlebigen Batterie 7 ausgeführt ist. In Ergänzung ist das elektronische Label 1' zudem in nicht weiter dargestellter Weise in diesem Beispiel auch zur Aufnahme von elektro-magnetischer Energie aus einem Funkfeld zur Versorgung und/oder Zwischenspeicherung in dem Label 1' selber ausgebildet. Auch andere Möglichkeiten einer kabellosen Aufladung oder Teilladung sind realisierbar, wie Induktionsladung oder gezielte Betätigung eines Piezo-Sensors über entsprechende Druckschwankungen in der Luft. Eine derartige Aufladung kann als Teil-Aufladung auch durch einen Kommissionierer erfolgen, der regelmäßig mit einem elektronischen Gerät in Form eines Smart-Phones, Tablets oder Notebooks in adaptierter Form i.d.R. kontaktlos die jeweiligen Labels 1' bzw. darauf enthaltene Barcodes abscannt, abliest oder erweiterte Datensätze aus dem Datenspeicher 9 bzw. einer Datenbank zu Inventurzwecken ausliest. Damit kann eine Lebensdauer der Batterie 7 noch weiter verlängert oder eine erschöpfte Energieversorgung eines Labels 1' vorübergehend für eine definierte Aufgabe reaktiviert werden. Das Label 1' würde eine erschöpfte Energieversorgung selbstverständlich für einen Wechsel der Batterie 7 durch eine eigenes internes Energiemanagement rechtzeitig genug vorab melden, so dass ein vorstehend beschriebenes Szenario als Ausnahmefall angegeben worden ist als Möglichkeit einer Datennutzung auch ohne eigene Energieversorgung in einem Label 1'.

Das elektronische Label 1' ist nach außen hin für einen Anwender im Wesentlichen grundsätzlich nach Art eines als ESL-Labels ausgebildet, wobei im Innern des elektronischen Labels 1' die erweiterte Logik 6' mit einer Datenverarbeitung vorgesehen ist, durch die das nicht-flüchtige Display 2 mit Graphikdaten G und auch der erforderlichen elektrischen Energie versorgt wird. Die erweiterte Logik 6' ist gemäß Figur 1 aber mit zusätzlichen Eingabemitteln 10, Ausgabemitteln 11 und/oder Sensoren 12 verbunden. Die zusätzlichen Eingabemittel 10 sind hier als mechanische Taster ausgeführt, als Ausgabemittel 11 sind optische Ausgaben in der Form von Leuchtdioden vorgesehen. Ausgabemittel 11 in Form mindestens eine Leuchtdiode können das Label 1' mit Eingang eines Pick-Auftrages als Pick-by-Light-System wirken lassen, wobei ein Kommissionierer über das Display 2 neben einer Auftragsnummer und einer Zieladresse für diese Teile auch eine Anzahl der zu entnehmenden Teile erfährt. Mit einer entsprechenden Anzahl von Betätigungen eines der mechanisch bzw. als Taster wirkenden Eingabemittel 10 quittiert der Kommissionierer eine Entnahme, wodurch im Display 2 die Anzahl der Teile heruntergezählt und eine Bestandsminderung direkt in dem Datenspeicher 9 vermerkt werden kann. Mit Erreichen einer vorbestimmten Menge kann ein finales Quittungssignal ausgegeben werden, beispielsweise ein Blinken einer Leuchtdiode als Ausgabemittel 11. Daraufhin kann das zur Pick-by-Light genutzte Ausgabemittel 11 direkt erlöschen oder seine Farbe wechseln, z.B. von "rot" auf "grün" und dann erlöschen. Ergänzend kann das Display 2 weitere Daten anzeigen, wie z.B. eine Darstellung des hier gelagerten Teils, notwendige nächste Arbeitsschritte, eine Information zu einem nächsten Artikel insbesondere in Form einer graphischen Richtungsangabe, oder den Hinweis auf eine bevorstehende Störung etc.. Durch diese Möglichkeiten wird eine deutliche Steigerung der Qualität der Kommissionierung sowohl hinsichtlich der Effizienz, als auch mit Blick auf die Sicherheit der Auswahl genau der richtigen Teile und in einer jeweils korrekten Anzahl erzielt.

Als Sensoren 12 sind in Figur 1 beispielhaft Temperatur ϑ, Beschleunigung a, Masse m bzw. Gewicht, Humidität Hm und Lichtintensität L aufgeführt. Die von diesen Sensoren an die Logik 6' übertragenen Werte sind in der Datenbank 9 protokollierbar. Damit kann anhand einer gemessenen Masse m eine Änderung eines Füllstands eines Regal-Lagerfachs mitgeschrieben und entsprechend verarbeitet werden, insbesondere zur automatischen Auslösung einer Order zum Nachfüllen. Es kann aber auch anhand einer protokollierten Temperatur ϑ eine Aufrechterhaltung einer erforderlichen Kühlung nachgewiesen werden, wie auch Humidität Hm und Lichtintensität L für die Haltbarkeit einer Verpackung oder aber eine Frische von Blumen, Gemüse oder Obst von einer Produktionsstätte bis zu einem Endverkaufsort wesentlich und damit zu überwachen sind. Derartige Messwerte von Sensoren 12 werden je nach Anwendungsfall mindestens fertigungsbegleitend, in einer nachfolgend noch im Detail beschriebenen erweiternden Anwendung auch über eine Logistikkette hinweg oder gar als eine Art von Gedächtnis über einen gesamten Produkt-Lebenszyklus hinweg abrufbar in einem produktbezogenen CPS als elektronischem Label 1' gespeichert. Damit wird das Label 1' zu einem ständigen und lebenslangen Begleiter insbesondere eines höherwertigen Produktes, was selbstverständlich Funktionen einer Diebstahlsicherung umfasst, wie sie aktuell durch separate RFID-Systeme realisiert sind.

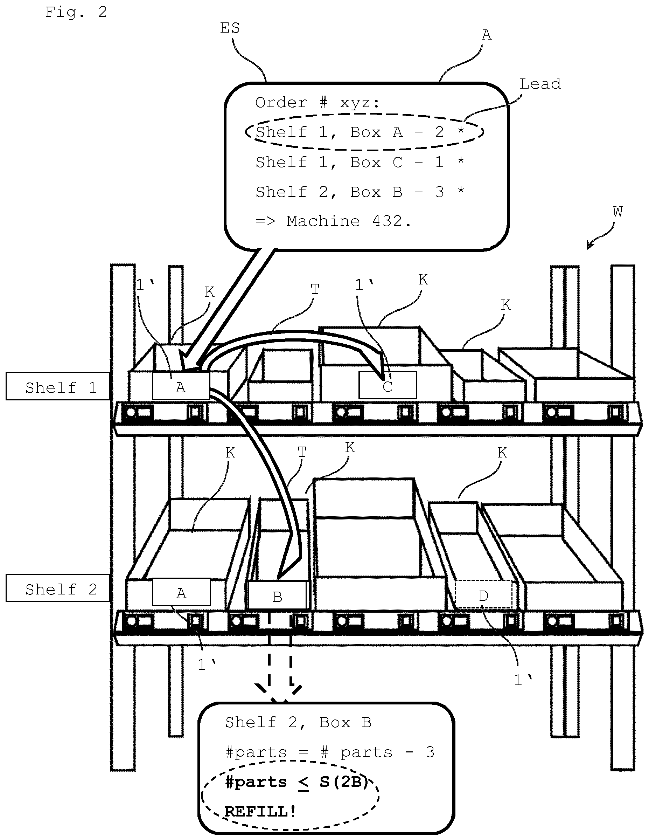

Figur 2 ist ein abgewandeltes Flussdiagramm zur Darstellung einer Daten-Abarbeitung innerhalb eines eingehenden Auftrages A über eine Anzahl von hier drei CPS-Einheiten hinweg, die als erweiterte elektronische Label 1' an Kleinteil-Lagerboxen K innerhalb eines angedeuteten Warenlagers W vorgesehen sind. Ein eingehender Auftrag A umfasst in diesem Beispiel eine identifizierende Order-Kennung mit einer anschließenden Liste von Teilen, die einem jeweiligen Standort entsprechend mit einer jeweiligen Anzahl von Teile aufgelistet sind. Abgeschlossen wird dieser Auftrag durch eine Angabe dazu, wohin die aufgelisteten Teile zu liefern bzw. transportieren sind. In diesem Fall sollen insgesamt 6 Bauteile an eine Maschine 432 gebracht werden.

Das Verfahren läuft nun so ab, dass beim Eingehen des Auftrags A dieser von einer in einem ersten Bestandteil des Auftrags A genannten ersten Vorrichtung bzw. einem elektronischen Label 1' als Eingangssignal ES quasi federführend abgearbeitet wird. In diesem Beispielfall ist dies ein elektronisches Label 1' an einer Kleinteil-Lagerboxen K in Regal 1 an einem Platz A. Dieser erste Bestandteil des Auftrags A definiert also den sog. "Lead". Dementsprechend wird dieser Auftrag A nur durch die Logik 6' in diesem Label 1' ausgewertet und ausgeführt. Das heißt im Detail, dass einem aktuellen Bestand von Teilen #parts(1A) in der Kleinteil-Lagerbox K in Regal 1 an Platz A auftragsgemäß 2 Teile abgezogen werden und hernach über einen Schwellwert-Vergleich überprüft wird, ob ein noch ausreichender Vorrat an Teilen an diesem Lagerplatz vorhanden ist. Parallel werden durch das Label 1' der Kleinteil-Lagerbox K in Regal 1 an Platz A aber auch noch weitere Meldungen bzw. Teilaufträgen T als Ausgangssignale AS an eine Kleinteil-Lagerbox K in Regal 1 an Platz C sowie eine Kleinteil-Lagerbox K in Regal 2 an Platz B mit den entsprechenden Stückzahlen gemäß dem beispielhaften Auftrag A übersandt. Auch an diesen Lagerstellen wird ein jeweils aktueller Bestand entsprechend der jeweiligen Teilaufträge T vermindert und die georderten Bauteile für einen Abtransport an die Maschine 432 bereitgehalten. Dieser Transport kann in nicht weiter dargestellter Art und Weise durch einen menschlichen Kommissionierer, oder aber ein führerloses Flurförder-Fahrzeug unter Weitergabe einer Zieladresse abgewickelt werden, zumal Anfangs- und Zieladressen durch den Auftrag A auch im Label 1' des "LEAD" genau bekannt sind.

In dem vorliegend skizierten Fall stellt nun das Label 1' der Kleinteil-Lagerbox K in Regal 2 an Platz B bzw. dessen Logik 6' fest, dass ein Bestand #parts(2B) für Deckung einer zukünftig zu erwartenden Anforderung von Teilen nicht mehr ausreichend sein kann, da mit Abarbeitung des aktuellen Teilauftrags T ein Schwellwert S(2B) unterschritten wurde. Die Logik 6' gibt daraufhin direkt eine Meldung REFILL zum Nachordern bzw. Auffüllen dieser Kleinteil-Lagerbox K in Regal 2 an Platz B aus, die über die Sende-und Empfangseinheit 5' sowie die Sendeantenne 8 ausgesandt wird. So wie der eingehende Auftrag A durch ein übergeordnetes Waren-Management-System zusammengestellt worden ist, so werden auch Meldungen der genannten Art für dieses übergeordnete System empfangen und durch dieses abgearbeitet, um mindestens rechtzeitig bzw. "just in time" Teile in ausreichender Menge ohne zu große Lagerbestände zur Verfügung zu haben.

Ein vorstehend anhand der Abbildung von Figur 2 beschriebenes Verfahren mit einem entsprechenden System schafft damit gegenüber bekannten Lager-Systemen u.a. hier Verbesserungen:
- alle Lagerbestände sind exakt und aktuell vorhanden;
- rechtzeitige automatische Bestellung benötigter Waren / Teile;
- durch Rückmeldungen wird eine Abnahme einer korrekten Anzahl von Teilen je Kleinteil-Lagerbox K zur Qualitätssicherung überwacht, quittiert und drahtlos gemeldet;
- Überbestände in jedem Lagerbereich werden bis zu einer Kleinteil-Lagerbox K hinunter durch Schwellwert-Definitionen weitgehend vermieden und
- Suchzeiten sind durch entsprechende optische Meldungen der Labels 1' extrem gering und binden zudem kein Personal, wobei auch ungeschultes Personal bei extrem kurzer Einarbeitungszeit in einem vorstehend beschriebenen Ablauf fehlerfrei geführt wird.

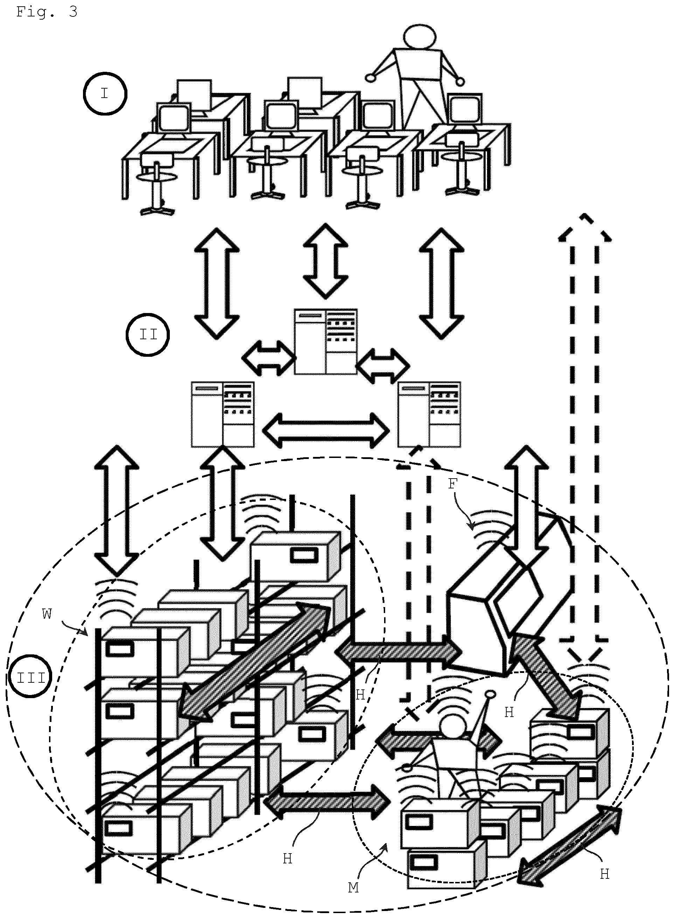

Figur 3 zeigt ein erweitertes Blockschaltdiagramm zur Darstellung einer durch CPS-Einheiten bzw. Label 1' realisierten neuartigen Kommunikationsstruktur innerhalb eines Warenlagers W mit angrenzendem Fertigungsbereich F und angedeutetem Supply-Chain-Management-Prozessen mit Kanban-Zwischenlagerungen. Wie in einer heute z.B. aus dem Bereich einer flexiblen Kleinserienfertigung her bekannten Basis-Struktur zeigt Figur 3 in einer Ebene I eine administrative Ebene, unter der als Ebene II ein Warenmanagement-System WM oder Enterprise-Resource-Planning (ERP) mit der unternehmerischen Aufgabe liegt, Ressourcen wie Kapital, Personal, Betriebsmittel, Material, Informations- und Kommunikationstechnik, IT-Systeme im Sinne eines jeweiligen Unternehmenszwecks rechtzeitig und bedarfsgerecht zu planen und zu steuern. Unter dieser Ebene II liegt mit Ebene III die operative Ebene mit einem Werkstatt- bzw. Fertigungsbereich F, einem Warenlager W sowie produktionsbegleitender Materialfluss M mit interner und externer Logistik sowie Kanban-Zwischenlagern.

Als Besonderheit jenseits einer Vernetzung von Labeln 1' mit Datenaustausch im eigentlichen Warenlager W, siehe Figur 2 mit zugehöriger Beschreibung, tritt hier nun - in Form schraffierter Pfeile H in Figur 3 angedeutet - eine horizontale Daten- bzw. Vernetzungsebene über die gesamte Ebene III hinweg und zwischen den Bestandteilen Werkstatt- bzw. Fertigungsbereich F, Warenlager W sowie produktionsbegleitendem Materialfluss M einschließlich interner und externer Logistik sowie Kanban-Zwischenlagern als logistischer Teil eines Supply-Chain-Managements hinzu. Diese neue horizontale Vernetzungsebene ist als drahtloses Datennetz zwischen den diversen Labeln 1' ausgebildet und kann sehr kurze Distanzen schnell überbrücken. Für längere Distanzen sind z.B. Repeater-Systeme bekannt, die durch Fremdspeisung einen Energieverbrauch in den Labeln 1' begrenzen. Zudem sind über gestrichelt eingezeichnete Pfeile in vertikaler Richtung noch neuartige Möglichkeiten des Datenaustauschs aus dem produktionsbegleitendem Materialfluss M einschließlich interner und externer Logistik sowie Kanban-Zwischenlagern der Ebene III in die Ebene II sowie die Ebene I hinein realisierbar. Damit ERP- bzw. WM-System in Ebene II nun sämtliche Waren identifizieren. Auch die Planung in Ebene I erhält nun konkrete Rückmeldungen über Waren- und Materialflüsse M.

Die vorstehend schon unter Bezugnahme auf die Abbildung von Figur 2 beschriebenen Mechanismen einer gegenseitigen Beeinflussung und Steuerung der Label 1' führen zu einer neuartigen und sehr vorteilhaften Flexibilisierung innerhalb eines klassischen Mehr-Behälter-Kanban-Systems, das hier als produktionsbegleitender Materialfluss M zusammengefasst dargestellt ist. Vollautomatische und exakte Rückmeldungen und Bestätigungen auch hinsichtlich der Umsetzung von Teilaufträgen aus jedem Bereich der Ebene III machen bekannte zentralisierte Lagerverwaltungssysteme weitestgehend entbehrlich. In angepasster Form könnten derartige Lagerverwaltungssysteme noch als Datensicherung bzw. Back-up Lösung aufrechterhalten bleiben.

Auch ist gemäß Figur 3 nun eine Datenverbindung zwischen dem Bereich des Materialflusses M aus der Ebene III heraus in die Ebene II und ggf. noch weiter möglich, so dass damit Statusmeldungen und Verfügbarkeitsbestätigungen beispielsweise zu an einer Maschine in der Fertigung bereitgestellten Teilen ausgetauscht werden können, um einen Gesamtprozess optimiert zu steuern. Die Label 1' prüfen, bewerten und bestellen jeweils benötigten Nachschub unter Reduzierung der Bestände bei Sicherstellung der Lieferfähigkeit von selbst. Eine Optimierung der Supply-Chain ist damit von einer untersten Ebene her unter direkter Einbindung von internen oder externen Lieferanten möglich. Probleme und Störungen in der Liefer- und/oder Fertigungskette können zwischen Labels 1' in Warenlager W, dem Materialfluss M mit entsprechenden Transportbehältnissen sowie einer jeweiligen Ziel-Verarbeitungseinheit F analysiert und sogar selbstständig behoben werden. Zumindest können unter Meldung konkreter Störungen Umgehungslösungen ermittelt und gemeldet werden.

Der vorstehend beschriebene Einsatz intelligenter Label 1' schafft damit eine direkte, bidirektionale Verbindung zwischen der Produktions- und der Informationswelt, die hier z.B. durch Planung, Controlling und Lagerhaltung verkörpert wird. Die beschriebene Dezentralisierung insbesondere mit Blick auf eine vormals ausschließlich zentral abgewickelte Datenhaltung mit Aufteilung auf autonome Einheiten mit gegenseitiger Vernetzung schafft Rationalisierungseffekte, indem ehemals passive Objekte zu kommunikationsfähigen Informationsträgern gewandelt werden, die das Potential besitzen, sich selbständig zu verwalten, zu vernetzen und zu organisieren. Damit werden traditionelle Fertigungsorganisationen grundlegend verändert, da Fertigungsschritte durch den Einsatz intelligenter Label 1' organisiert und optimiert nicht länger "Top Down", sondern "Bottom Up" strukturiert werden.

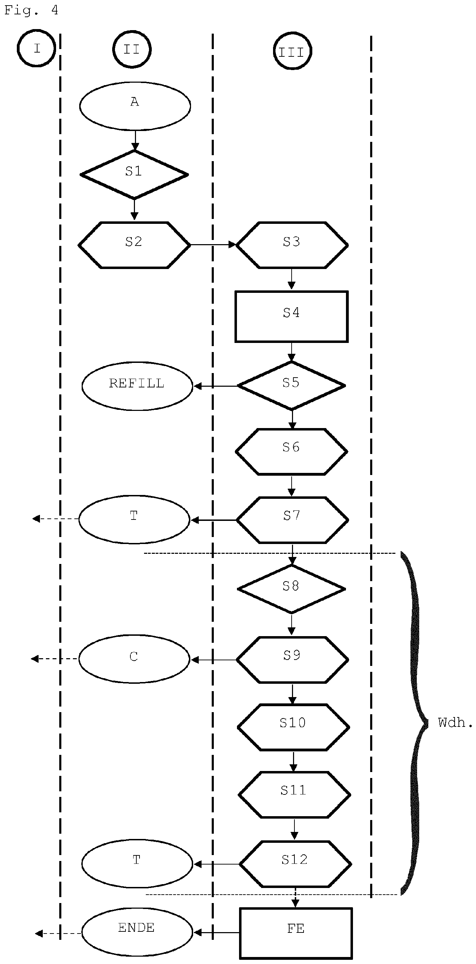

Figur 4 ist ein Flussdiagramm zur Darstellung einzelner TeilSchritte einer im Ablauf Fertigung mit Steuerung zwischen einer Planungs- und Dispositionsebene, Ebene II gemäß Figur 3, sowie einer Produktionsebene, der operativen Ebene III mit einem Werkstatt- bzw. Fertigungsbereich F von Figur 3. Hier wurde besonderer Wert auf exemplarische Darstellung von Steuervorgängen innerhalb eines CPS gelegt, das aktiv steuernd in den Gesamtprozess eingreift. Demnach geht ein Auftrag A in der Planungs- und Dispositionsebene, Ebene II, ein. Dort wird in Schritt S1 geprüft, ob Kapazitäten zur Abarbeitung dieses Auftrags A zur Verfügung stehen. Falls dem so ist, wird mit Schritt S2 eine Auftragsfreigabe verfügt, durch die in Ebene III als Schritt S3 entsprechende Transportträger im Warenlager W zur Kommissionierung bzw. dem Zusammentrag der Bestandteile des Auftrags A bereitgestellt werden. In Schritt S4 erfolgt dieser Zusammentrag. Mit einer Anpassung und Prüfung jeweiliger Bestände in Schritt S5, wie vorstehend unter Bezugnahme auf Figur 2 beschrieben, und ggf. Ausgabe einer Anforderung nach Auffüllung REFILL schließt sich mit Schritt S6 eine interne Logistik an mit einer Überführung der Transportträger mit den darin gemäß der Teilaufträge enthaltenen Teilen an ein vorbestimmtes Ziel. Schritt S7 bezeichnet nun eine Reihung z.B. in einem Kanban-Lager vor einem Arbeitsplatz oder einer Fertigungsmaschine, zu dem insbesondere als Prozesskontrolle ein Tracking-Signal T ausgegeben wird.

Schritt S8 kennzeichnet eine Zeitmarke, zu der eine Einhaltbarkeit eines vorbestimmten Liefertermins überprüft wird. Mit Schritt S9 erfolgt eine Freigabe einer Bearbeitung an einem angezielten Arbeitsplatz oder einer Fertigungsmaschine, wodurch entsprechende Kosten C an Ebene II gemeldet werden. In Schritt S10 melden sich die zugeführten Materialien und Teile zur Bearbeitung an, so dass deren Vollständigkeit automatisch überprüft werden kann. Dazu ruft der aktuelle Arbeitsplatz oder die Fertigungsmaschine in Schritt S11 die anstehenden Arbeitsanweisungen ab. Mit Schritt S12 wird eine Bearbeitung fertiggestellt und die Fertigstellung in Sinne eines weiteren Trackingsignals an Ebene II gemeldet.

Die Schritte S8 bis S12 können eine Schleife bilden, indem sich derartige Zuführungen von Teilen an verschiedenen Arbeitsplätzen oder Fertigungsmaschinen mit jeweils abweichenden Teil-Fertigungsaufträgen solange wiederholen, bis ein Endprodukt in Schritt FE fertiggestellt worden ist. Eine Fertigmeldung ENDE an Ebene II löst in Ebene II nun noch einen Auftrag für einen jeweiligen Versand aus, der selbstverständlich mit Anweisungen an eine Transportverpackung an Ebene III gekoppelt sein kann. In der durch gestrichelte horizontale Pfeile angedeuteten Weise können Rückmeldungen aus Ebene III über Ebene II z.B. als Kontrollmitteilungen auch bis in die Ebene I erfolgen, wie bereits zu Figur 3 als neuartige Möglichkeit angemerkt.

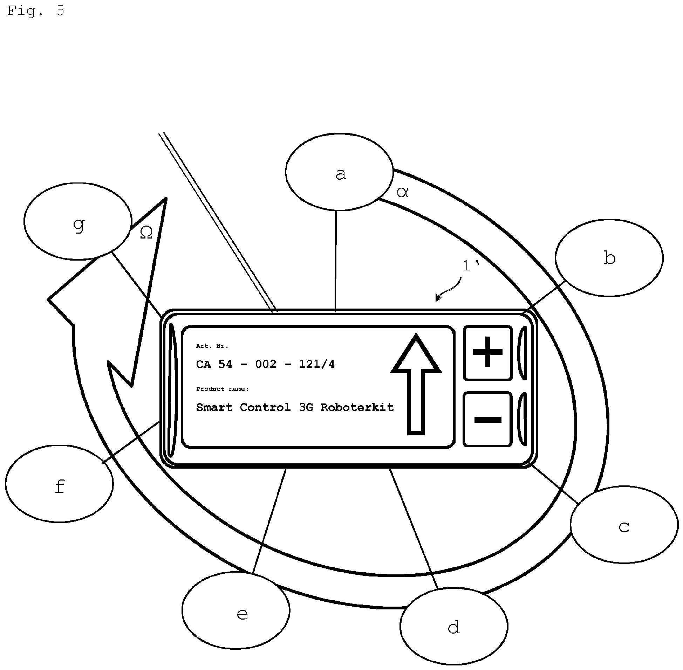

Figur 5 zeigt eine Ausführungsform eines CPS, der einen gesamten Produkt-Lebenszyklus begleitet. Damit baut diese Darstellung dadurch teilweise auf dem unter Bezugnahme von Figur 4 beschriebenen Fertigungsverlauf auf, dass ein Kundenauftrag A einen Anfang für ein nachfolgend herzustellendes Produkt definiert. In einer flexiblen Fertigung mit einer Struktur gemäß Figur 3 sind alle Komponenten in der Ebene III über Label 1' miteinander verbunden bzw. datentechnisch vernetzt. Dieser Kundenauftrag A wird nun nach Fertigstellung in Position a mit allen Angaben zu diesem Produkt und dem Kunden als Details in einem Label 1' abgespeichert, der an dem Produkt fixiert ist. Damit steht das Label 1' für den gesamten Prozess als steuerndes und kontrollierendes Element im Zentrum, da es nach Eingang des kompletten Auftrags A in Position b eine Planung mit einem Zeitablauf und einer Reservierung von Rohlingen bzw. Materialien und Bauteilen aufnimmt, in Position c noch zusätzliche, begleitende Fertigungsinformationen einer Reservierung von Maschinen mit einer Reihung von Produktionsschritten, um in Position d mit möglichen Design-Informationen gespeist zu werden, die den Kundenauftrag A grundsätzlich sogar jederzeit noch ergänzen können. Die in den Positionen b, c und d vorgegebenen Informationen steuern nun eine Maschinenauswahl und die Fertigung selber, was in der Produktion aber im Wesentlichen nur durch das Label 1' ausgeführt wird. Bei Störungen suchen die über die Label 1' miteinander vernetzten Teilsysteme gemeinsam Alternativen und Lösungen.

Das Label 1' weiß in gewisser Weise zu welchem Endprodukt es gehören soll und welche Produktionsschritte in welcher Reihenfolge mit welchen Zusatzteilen dazu jeweils erforderlich sind. Im Rahmen der als Position e zusammengefassten eigentlichen Fertigung suchen sich die einzelnen Bauteils eines Produkts gemäß Auftrag A eigenständig ihren Weg zu den entsprechenden Positionen innerhalb einer Fertigung. Das Label 1' erkennt eine jeweilige Maschine oder Arbeitsstation und überwacht auch eine Einhaltung einer Arbeitsreihenfolge. Bei Unstimmigkeiten verweigert das Label 1' sogar eine Bearbeitung des ihm zugeordneten Produktes durch eine betreffende Maschine.

In dem Label 1' sind schließlich auch alle Informationen abgelegt, die bei einer Verpackungswahl in Station f mit Versand-Information für eine Logistik zu dem Kunden benötigt werden, der den ursprünglichen Auftrag A gegeben hatte. Aber auch damit hat ein Arbeitsleben des Labels 1' noch nicht sein Ende gefunden. Bei einem Kunden in Position g sind die in dem Label 1' abgelegten Informationen als produkt-bezogene Kunden-Info genauso wichtig, wie eine Steuerung und Protokollierung möglicher Wartungsintervalle, Analyse und Protokollierung eines Reparaturfalls bis hin zur Feststellung eines Lebensendes z.B. auf Basis eines wirtschaftlich unrentablen Reparaturfalls oder eines Produktalters. Auch dann kann der Kunde aus dem Label 1' noch Informationen zu einer fachgerechten Entsorgung beziehen, wenn in dem Label 1' selber nicht sogar mindestens ein Kontakt für eine anstehende Entsorgung für den Kunden angegeben wird.

Bei allen vorstehend genannten Schritten kommt einem Display 2 des Labels 1' zusammen mit einer erweiterten Logik 6' sowie der Datenbank 9 eine besondere Bedeutung zu: Über die bereits zu Figur 1 beschriebenen Eingabemittel 10, hier als zwei mechanische Tipptaster ausgebildet und Ausgabemittel 11 für entsprechende optische Kontrollsignale, können die Eingabemittel 10 durch das Display 2 kontextsensitiv mit Funktionen belegt werden, so dass situativ entsprechende Informationen angezeigt oder Eingaben getätigt werden können. Das Display erfährt durch energiesparende Beschriftung und deren schnelle Änderungen eine Mehrfachnutzung von einer reinen Angabe bzw. Beschriftung einer KTL-Box ggf. auch mit Barcodes oder Bildern über Angaben zu einem aktuellen Pick-Auftrag hin zu einem Richtungsweiser als Teil einer Zielführung bzw. eines Leitsystems in dem Lager z.B. für eine anschließende Pick-Aufgaben. Das Label 1' selber bildet damit eine neuartige, multifunktionale Kommunikationsschnittstelle zu einem Kommissionierer mit Möglichkeiten einer Ankopplung an entsprechende Endgeräte, wie Datenbrillen oder portable elektronische Ablese- und/oder Datenverarbeitungsgeräte in Form von Tablets. Damit ist ein Label 1' beschrieben worden, das als Smart Label im vollen Sinn dieser Bezeichnung von einer flexiblen Etikettierung von Behältern in einem Lager bis zu einem jenseits einer Produktionsbegleitung über einen Produkt-Lebens-Zyklus hinweg als Begleiter dienenden Element einsetzbar ist.

Unter Verwendung eines vorstehend beschriebenen elektronischen Labels 1' tritt eine sehr vorteilhafte Verschlankung von Beschaffungs- und Logistikprozessen auf durch
- Flexibilisierung des klassischen Mehr-Behälter-Kanban-Systems;
- Schnellere Reaktion auf Kundenanforderungen;
- Höhere Transparenz der Bestände;
- Geringere Kapitalbindung durch geringere Bestände;
- Höhere Flexibilität durch vereinfachten Entnahmeprozess;
- Erhöhung der Pickzahl bei verbesserter Zuverlässigkeit der jeweiligen Picks und
- Optimierung der Supply-Chain unter direkte Einbindung interner und/oder externer Lieferanten.

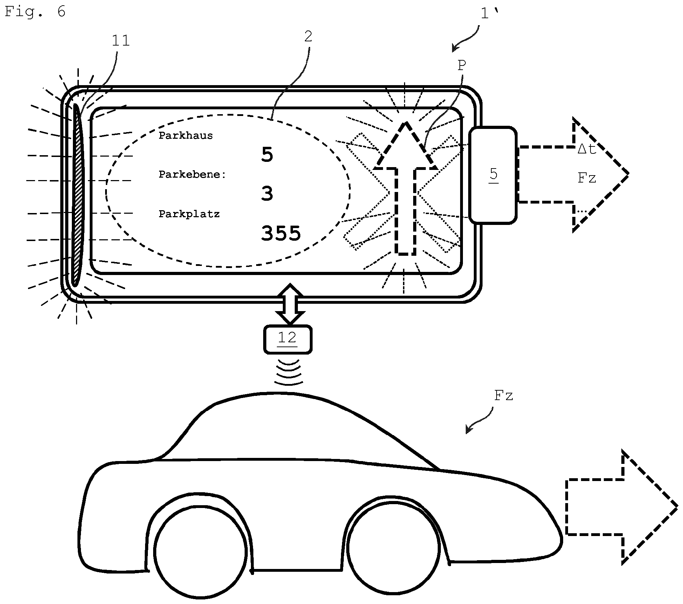

Über die vorstehend beschriebene Verwendung eines elektronischen Labels 1' hinausgehend zeigt Figur 6 eine weitergehende Anwendung anhand des alltäglichen Problems, einen Parkplatz zu finden, insbesondere in einer fremden Stadt. Figur 6 zeigt hierzu einen Parkplatz als Ausschnitt eines Parkhauses im Sinne eines Warenlagers mit Ermittlung freier Stell-Flächen bzw. Parkplätze. Es kann sich aber auch um einen Parkplatz am Straßenrand oder einen Parkplatz-Gelände etc. handeln. Jedem Parkplatz ist hier in Form einer ein-eindeutigen Beschriftung ein CPS in Form eines elektronischen Labels 1' zugeordnet. Diese Angabe ist einem Anwender zum Wiederfinden seines Fahrzeugs bekannt, nun ist eine Übersendung dieser Koordinaten insbesondere für registrierte Anwender z.B. in eine sog. App auf ein Mobiltelefon oder als eMail möglich.

Durch seine optischen Ausgabemittel 11 signalisiert das elektronische Label 1' von weiter Distanz sichtbar einen freien Parkplatz, vorzugsweise durch ein grünes Blicklicht. Ein rotes Licht des optischen Ausgabemittels 11 ist hier als Melder für einen besetzten, gesperrten oder reservierten Parkplatz genutzt. Auch wird in einer weiteren System-Ausbaustufe eine Größe eines jeweiligen Fahrzeugs Fz kontaktlos erfasst, um so nur diejenigen Parkplätze anzubieten, die ein bequemes Ein- und Aussteigen ermöglichen oder zu sonstigen Kriterien passen, wie z.B. Einladen von Kinderwagen oder Gehhilfen.

Schließlich wird ein Pfeil P durch ein beispielhaft dargestelltes Kreuz als Besetzanzeigt genutzt. Ferner wird der Pfeil P über bzw. an einem Parkplatz auch im Zuge eines Anzeigewechsels als Richtungspfeil genutzt, um im Fall einer Reservierungs- oder Besetzanzeige auf dem elektronischen Label 1' eine Richtung zu einem nächsten freien und nach zuvor beispielshaft genannten Kriterien passenden Parkplatz anzuzeigen.

Durch den Sensor 12 erkennt das elektronische Label 1' einen Belegungszustand durch ein Fahrzeug Fz und startet mit Beginn der Belegung des betreffenden Parkplatzes durch das Fahrzeug Fz eine interne Zeitmessung Δt zur integrierten individuellen Parkzeit-Ermittlung mit nachfolgender Abrechnung z.B. auf Basis einer zentral oder in dem elektronischen Label 1' individuell hinterlegen Tariftabelle - womit auch leicht je nach Lage eines Parkplatzes unterschiedliche Preisgestaltungen umsetzbar sind. Eine Meldung über eine Belegung wird an ein nicht weiter zeichnerisch dargestelltes, übergeordnetes Parkhausverwaltungssystem als Ersatz eines Waren-Management-Systems durch das CPS bzw. elektronische Label 1' übermittelt, das auch über eine zentralisierte Buchhaltung bzw. Kasse verfügt. Über das elektronische Label 1' bzw. seine Sende- und Empfangseinheit 5' und/oder das Parkhausverwaltungssystem wird eine Information zu dem zu entrichtenden Parkgebühren elektronisch zu einer Kasse an einer Ausfahrt übermittelt und dort auf Basis einer Fahrzeug-Erkennung dem zuvor geparkten und nun das Parkhaus verlassenden Fahrzeug W zugeordnet. Ohne Parkschein kann so eine individuelle, orts- und nutzungsabhängige Bepreisung mit der Möglichkeit einer Zahlung z.B. an einer Schrankenanlage erfolgen. Auch sind insbesondere an der Schrankenanlage elektronische und kontaktlose Zahlungsmöglichkeiten mittels Near Field Communication (NFC) über ein Mobiltelefon realisierbar.

Ziel dieses vorstehend anhand von Figur 6 grob beschriebenen Ausführungsbeispiels ist es, das lästige und zeitaufwendige Suchen eines Parkplatzes in einem Fahrzeug Fz entfallen zu lassen und jeden Anwender zuverlässig zu leiten und zu informieren. Dazu kann schließlich auch die Anzeige des Displays 2 beitragen, indem der Anwender mit dem Abstellen seines Fahrzeugs Fz zielgerichtet Werbung oder sonstige Informationen direkt vor oder bei dem Verlassen seines Fahrzeugs Fz angezeigt bekommt. Mit dem Starten des Fahrzeugs Fz und anschießenden Verlassen des Parkplatzes werden u.a. Hinweise über eine Parkdauer, entstandene Kosten und/oder anstehende Zahlungsmöglichkeiten gegeben. Auf Parkscheine kann damit verzichtet werden, wobei auch die Suche nach und Fuß-Wege zu einem Kassenautomaten entfallen.

### Bezugszeichenliste

- 1: Vorrichtung / elektronisches Label
1' CPS als erweitertes elektronisches Label
- 2: Display
- 3: geschlossenes Gehäuse
- 4: Empfangsantenne
- 5: Empfangseinheit
5' Sende- und Empfangseinheit
- 6: Logik
6' erweiterte Logik
- 7: Batterie
- 8: Sendeantenne
- 9: Datenspeicher / Datenbank
- 10: Eingabemittel (z.B. mechanisch)
- 11: Ausgabemittel (z.B. optisch)
- 12: Sensor
- A: Auftrag
- AS: Ausgangssignal
- C: Kosten
- ES: empfangenes Signal / Eingangssignal
- F: Werkstatt- bzw. Fertigungsbereich
- G: Anzeigesignal für Graphik des Displays 2
- H: horizontale Daten- bzw. Vernetzungsebene
- P: Anzeige / Pfeil zeigt auf ein Regalfach /Richtungspfeil
- M: Materialfluss
- W: Warenlager
- ϑ: Temperatur
- a: Beschleunigung
- m: Masse bzw. Gewicht
- Hm: Humidität
- L: Lichtintensität
- T: Teilauftrag
- K: Kleinteil-Lagerbox
- #parts(A): aktueller Bestand von Teilen in der KleinteilLagerbox K an Position 1A
- S(2B): Schwelle für die Anzahl von Teilen an Position 2B
- Fz: Fahrzeug auf einem Parkplatz
- Δt: Parkzeit
- a - g: Stationen von Auftragszusammenstellung bis zu einem Produktlebensende
- I: administrative Ebene
- II: WM- / ERP-Ebene
- III: operative Ebene

## Patentansprüche

1. Vorrichtung, die zur Übertragung, Speicherung und Darstellung von Daten an definierten Stellen innerhalb eines Warenlagers ausgebildet ist,
**dadurch gekennzeichnet, dass**
innerhalb des Warenlagers (W) Cyber-physische Systeme CPS (1) angeordnet sind, die als dezentrale Vorrichtungen zur Übertragung, Speicherung und Darstellung von Daten ausgebildet sind, und
die Cyber-physischen Systeme (1) jeweils mit einer eigenen, dezentralen Steuerung versehen sind,
wobei drahtlose Datenverbindungen zur Vernetzung der Cyber-physische Systeme (1) miteinander in einem Internet der Daten und Dienste vorgesehen sind.

2. Vorrichtung nach dem vorhergehenden Anspruch, **dadurch gekennzeichnet, dass** die Cyber-physischen Systeme (1) dazu ausgebildet sind, sich selbständig und/oder auch gegenseitig zu steuern, wozu sie mindestens eine gemeinsame Daten-Schnittstelle aufweisen.

3. Vorrichtung nach einem der vorhergehenden Ansprüche, **dadurch gekennzeichnet, dass** zur Selbststeuerung benötigte Daten in den einzelnen CPS (1) selbst dezentral bevorratet sind, wozu jede CPS (1) vorzugsweise einen eigenen Datenspeicher (9) aufweist, der insbesondere nicht-flüchtig ist.

4. Vorrichtung nach einem der vorhergehenden Ansprüche, **dadurch gekennzeichnet, dass** eine stationäre Energieversorgung vorgesehen ist, insbesondere in Form einer langlebigen Batterie (8), oder/oder jede CPS auch zur Aufnahme von elektro-magnetischer Energie aus einem Funkfeld zur Versorgung und/oder Zwischenspeicherung ausgebildet ist.

5. Vorrichtung nach einem der vorhergehenden Ansprüche, **dadurch gekennzeichnet, dass** die Vorrichtung (1) nach außen hin für einen Anwender grundsätzlich nach Art eines als ESL-Labels ausgebildet ist und in der Vorrichtung (1) eine erweiterte Logik (6') mit einer Datenverarbeitung vorgesehen, durch die ein nicht-flüchtiges Display (2) mit Graphikdaten (G) und der erforderlichen elektrischen Energie versorgt wird, wobei die erweiterte Logik (6') vorzugsweise mit zusätzlichen Eingabemitteln (10), Ausgabemitteln (11) und/oder Sensoren (12) verbunden ist.

6. Verfahren zur Übertragung, Speicherung und Darstellung von Daten an definierten Stellen innerhalb eines Warenlagers,
**dadurch gekennzeichnet, dass**
innerhalb des Warenlagers (W) Cyber-physische Systeme CPS (1) verwendet werden, wobei in jedem Cyber-physischen System (1) eine eigene, dezentrale Steuerung verwendet wird, so dass beim Eingehen eines Auftrags (A) von einer ersten Vorrichtung (1) entsprechend einem ersten Bestandteil (LEAD) des Auftrags (A) dem Umfang und Inhalt des Auftrags (A) entsprechend mindestens eine weitere Meldung (T) an mindestens eine weitere Vorrichtung (1) versandt wird, die mit einer entsprechenden Stückzahl auch zu diesem Auftrag beiträgt.

7. Verfahren nach dem vorhergehenden Anspruch, **dadurch gekennzeichnet, dass** in dem Fall, dass eine Vorrichtung (1) feststellt, dass ein Bestand (#parts) für Deckung einer aktuellen oder zukünftig zu erwartenden Anforderung von Teilen nicht mehr ausreichend ist oder ein Schwellwert (S) unterschritten wird, direkt eine Meldung (REFILL) zum Nachordern bzw. Auffüllen von der jeweiligen Vorrichtung (1) aus ausgesandet wird.

8. Verfahren nach dem vorhergehenden Anspruch, **dadurch gekennzeichnet, dass** alternativ oder zusätzlich ein Austausch- oder Ersatzteil durch eine entsprechende interne Meldung zur Deckung des aktuellen Bedarfs aktiviert und versandt wird.

9. Verfahren nach einem der beiden vorhergehenden Ansprüche, **dadurch gekennzeichnet, dass** eine entsprechende Rückmeldung (REFILL) an ein Waren-Wirtschaftssystem und/oder einen Sachbearbeiter gegeben wird.

10. Verfahren nach einem der vorhergehenden Ansprüche 6-9, **dadurch gekennzeichnet, dass** die Vorrichtungen (1) über drahtlose Datenverbindungen in einem Internet der Daten und Dienste miteinander vernetzt sind und sich dadurch selbständig und/oder gegenseitig steuern.
